# EUROPEAN PATENT APPLICATION

(11) **EP 2 139 001 A1**
(43) Date of publication of application: **30.12.2009**
(21) Application number: 08159113.3
(22) Date of filing: 26.06.2008
(51) Int. Cl.: G11B 7/005, G11B 7/258, G11B 7/257

(54) **Storage medium for optical data and optical data disc**

(71) Applicant: Deutsche Thomson OHG, 30625 Hannover (DE)
(72) Inventor: Knappmann, Stephan, 78658, Zimmern ob Rottweil (DE); Pacearescu, Larisa, 78050, Villingen-Schwenningen (DE)
(74) Representative: Arnold, Klaus-Peter

(57) **Abstract**

Storage medium for optical data and optical data disc

A storage medium for optical data according to the invention comprises a substrate (S) and an active layer (A). The storage medium further comprises, opposite to the light incident side of the active layer (A), a reflective layer (R). According to the invention at least one of the reflective layer and a separate layer is generated as a thermal focusing layer (T), which has a decreasing thermal conductivity with increasing temperature.

## Description

### BACKGROUND OF THE INVENTION

### FIELD OF THE INVENTION

The present invention relates to a storage medium for optical data. Respective storage mediums for optical data are used for recordable or rewritable discs (DVD-R/RB, BD-R/RE etc.) and discs with a high data density (MSR, Super-RENS).

### DESCRIPTION OF THE PRIOR ART

A storage medium for optical storage and retrieval of information is described in the US-application US 2006/0240213 A1. The storage medium comprises a substrate and an active layer, e. g. a layer in which information can be stored (coded) and changed.

The active layer disclosed in the US-application is provided with pre-determined pattern of bit positions in order to reduce thermal cross talk. In addition, data density can be increased. A certain effort is necessary to manufacture pre-determined pattern of bit positions.

The described storage medium further comprises a reflective layer mentioned as a mirror layer and a thermally insulating layer. The mirror layer made by aluminium or silver increases the reflectivity. The thermally insulating layer is provided to reduce cross talk by heat diffusion.

### SUMMARY OF THE INVENTION

It is desirable to improve a storage medium for optical data e. g. with respect to recording on recordable and rewritable discs or with respect to read-out of storage medium with a high data density. In particular, the cross-write and the cross-talk while using a high data density respectively should be low. The manufacturing effort should be reduced.

According to the invention, a storage medium for optical data comprises a substrate and an active layer. The active layer is a layer in which the laser beam is effective in order to write and to read-out data e.g. of recordable and rewritable discs or in order to change optical properties for reading-out data of discs with a high data density.

The storage medium further comprises, opposite to the light incident side of the active layer, a reflective layer. According to the invention at least one of the reflective layer and a separate layer is generated as a thermal focusing layer, which has a decreasing thermal conductivity with increasing temperature.

A layer with a thermal conductivity which decreases with increasing temperature causes a concentration of the heat generated by a focused laser spot. As a result, the power efficiency is increased and the cross-write and cross-talk effects are reduced. The manufacturing effort is diminished.

Usually, it is required that the temperature distribution which is caused by the focused laser beam in a storage medium, e.g. with a layer stack comprising a substrate layer, an active layer and a reflective layer, is spatially restricted to a small area. The temperature slope should be very steep. Especially in radial direction, e. g. perpendicular to spiral data tracks in an active layer of a rewritable disc, it is required that the temperature drops to a sufficiently low level at the neighbouring track in order to avoid cross-writing. The temperature distribution can be influenced by the thermal design of the layer stack, e. g. by the material and thickness of the layers, and by the laser properties, namely the pulse length of the laser. However, even with an optimized layer stack and pulse length the shape of the temperature distribution is restricted by heat dissipation.

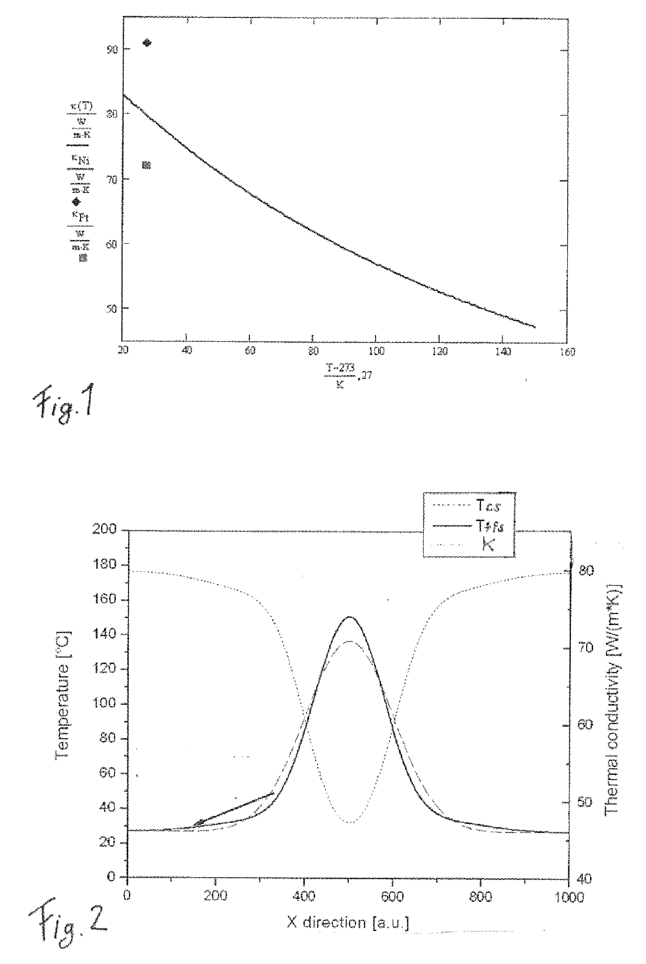

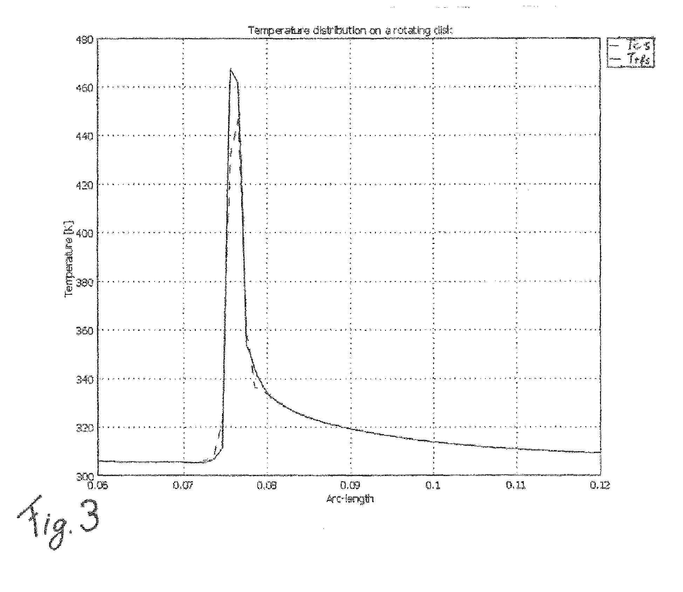

The new thermal focusing layer allows focusing the high temperature area. This is reached by a material of the new thermal focusing layer where the thermal conductivity decreases with increasing temperature. In this new thermal focusing layer, the heat in a low temperature area can easily dissipate due to the higher thermal conductivity. In the high temperature area the heat is bound due to the lower thermal conductivity. As a result, due to the thermal focusing layer the shape of the temperature distribution in the active layer is changed into a shape with a higher and smaller peak with the same laser pulse energy (see figures 2 and 3 and the description).

The invention is applicable to write-once discs and rewritable discs where the cross-writing is reduced and to discs with a high data density where the cross-talk is reduced.

In one embodiment of the invention the thermal focusing layer is also generated as the reflective layer. Preferably, the material of the thermal focusing layer is an alloy of nickel and platinum, i.e. a nickel platinum NiPt alloy.

In one embodiment the storage medium for optical data further comprises a thermally insulating layer, opposite to the light incident side of the active layer, wherein at least one of the thermally insulating layer, the reflective layer and a separate layer is generated as the thermal focusing layer.

In one embodiment the thermal focusing layer is also generated as the thermally insulating layer. Preferably, the material of the thermal focusing layer comprises a dielectric material or a ceramic material. Applicable ceramic materials are magnesium oxide MgO and aluminium oxide Al₂O₃, which show a strong decrease of thermal conductivity above room temperature.

In one embodiment the thermally insulating layer is arranged between the active layer and the reflective layer. As one alternative, the thermal focusing layer is arranged between the active layer and the thermally insulating layer or between the thermally insulating layer and the reflective layer. As another alternative, the thermal focusing laver which is also generated as a thermally insulating layer is arranged between the active layer and the reflective layer. As a further alternative, the thermal focusing layer which is also generated as a reflective layer is arranged opposite to the light incident side of the thermally insulating layer.

In one embodiment of the invention the storage medium comprises an additional thermally insulating layer between the substrate and the active layer.

In one embodiment of the invention the active layer is generated as a recording layer. In another embodiment of the invention the active layer is generated as a mask layer.

Preferably, a storage medium according to the invention is used for an optical data disc.

In one embodiment, the storage medium according to the invention is used for write-once discs with a layer stack comprising a substrate, an active layer and a thermal focusing layer which is also generated as a reflective layer. The active layer of these discs is preferably generated as a recording layer e.g. as a layer with an organic dye material.

In one embodiment, the storage medium according to the invention is used for rewritable discs with a layer stack comprising a substrate, an additional thermally insulating layer, an active layer, a thermally insulating layer and a reflective layer, wherein the thermal focusing layer is generated as at least one of a separate layer, the thermally insulating layer or the reflective layer. The active layer of these discs is preferably generated as a recording layer e.g. with a phase change material or with a bi-layer. The phase change material comprises e. g. a germanium antimony tellurium GeSbTe alloy or a silver indium antimony tellurium AgInSbTe alloy. The bi-layer comprises e. g. copper Cu and silicon Si.

In one embodiment, the storage medium according to the invention is used for high density data discs with a layer stack comprising a substrate, an additional thermally insulating layer, an active layer and a thermally insulating layer, and a reflective layer where applicable, wherein the thermal focusing layer is generated as at least one of a separate layer, the thermally insulating layer or the reflective layer. The substrate of these discs comprises a pit structure. The active layer of these discs is preferably generated as a mask layer in order to enable read out of data below the optical diffraction limit. The mask layer is provided e.g. with a similar phase change material or with a semiconductor material, e. g. an indium tellurium InSb alloy. The mask layer effects nonlinearly changing optical properties according to the heat distribution caused by the laser beam.

### BRIEF DESCRIPTION OF THE DRAWINGS

Invention will be explained in more detail with reference to some embodiments and accompanying figures in which:
Fig.1 shows the thermal conductivity K of nickel platinum NiPt alloy between room temperature and 150° Celsius;
Fig. 2 shows the principal difference between the temperature distribution T_{cs} during laser heating for a conventional disc (dashed curve) and the temperature distribution T_{tfs} for disc with a thermal focusing layer (solid curve) and the principal distribution of the thermal conductivity K of the NiPt alloy from Figure 1 (pointed curve);
Fig. 3 shows a simulated temperature distribution curves for a focused laser spot which moves along the track of an optical disc, wherein the dashed curve T_{cs} corresponds to a conventional disc and the solid curve T_{tfs} corresponds to a disc with a thermal focusing layer;
Fig. 4 shows a layer stack of a storage medium for optical data according to one embodiment of the invention;
Fig. 5 shows a layer stack of a storage medium for optical data according to another embodiment of the invention.

### DETAILLED DESCRIPTION OF THE INVENTION

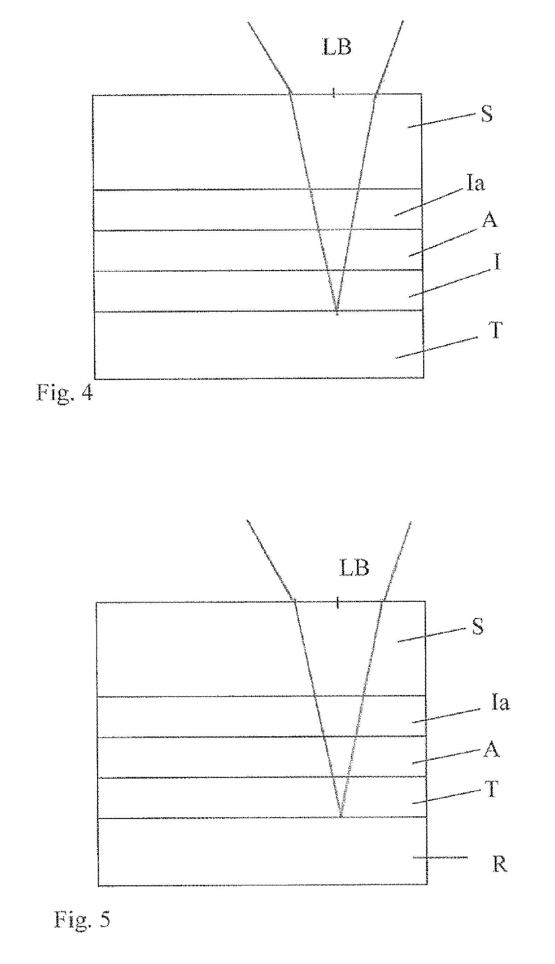

A storage medium for optical data of an embodiment of the invention comprises a substrate S and an active layer A. It further comprises a thermally insulating layer I and a reflective layer, opposite to the light incident side of the active layer A. According to the invention the reflective layer is generated as a thermal focusing layer T, which has a decreasing thermal conductivity with increasing temperature. A layer stack of this storage medium is shown in figure 4, wherein a laser beam LB at the light incident side of the active layer A is indicated. The layer stack comprises an additional thermally insulating layer Ia which is arranged between the substrate S and the active layer A.

The storage medium is generated as optical data disc, namely a rewritable disc, wherein the active layer A is generated as a recording layer with a phase changing material. The substrate S is provided with a groove structure. The thermally insulating layers I, Ia are made from a dielectric material. The material of the thermal focusing and reflective layer T comprises a nickel platinum NiPt alloy, in particular an annealed Ni_{0,75} Pt_{0,25} alloy film. The laser is used in a pulse mode.

The thermal conductivity K of the NiPt alloy between room temperature and 150° Celsius is shown in Figure 1. Figure 1 also shows the values for pure Ni and pure Pt at room temperature. The thermal conductivity K of the NiPt alloy decreases with increasing temperature.

Fig. 2 shows the principal difference between the temperature distribution T_{cs} during laser heating for a conventional disc (dashed curve) and the temperature distribution T_{tfs} for a disc with a thermal focusing layer (solid curve), e.g. the thermal focusing and reflective layer T. Figure 2 also shows the principal distribution K of the thermal conductivity of the NiPt alloy of Figure 1. The curves in Figure 2 represent the temperature distributions T_{cs}, T_{tfs} at a certain time delay after starting a short laser pulse. For each of the two curves the distribution corresponds to the respective time delay with a maximum peak temperature. Figure 2 shows that the maximum temperature of the disc with the thermal focusing layer is higher than that of the conventional disc while the width of the temperature distribution T_{tfs} of the disc with the thermal focusing layer T is smaller than the width of the temperature distribution T_{cs} of the conventional disc.

Figure 3 shows simulated temperature distribution curves for a focused laser spot which moves along the track of an optical disc. The dashed curve T_{cs} corresponds to a conventional disc where the solid curve T_{tfs} corresponds to a disk with the thermal focusing layer T. It can be seen that a higher temperature can be reached for the disc which uses the thermal focusing layer T. Further both curves show the well known asymmetric shape due to the delayed cooling of the disc behind the laser spot.

The thermal focusing layer, namely the thermal focusing and reflective layer T in this embodiment, is used for thermal balancing during recording and as reflective layer during read out. During the recording process the laser beam energy is mainly absorbed by the active layer i.e. the recording layer and is than transferred to the thermal focusing and reflective layer T. The thermal focusing layer in general has a strong influence on the temperature distribution in the active layer. In particular, the low thermal conductivity in the high temperature area delays the dissipation of the heat in the active layer. As a consequence, a higher temperature can be reached in the centre of the temperature distribution. Therefore the required laser power for recording can be reduced. After a certain delay time the heat dissipates more quickly because the thermal conductivity increases corresponding to the decreasing temperature. As a result, for a certain laser pulse the temperature distribution T_{tfs} at the beginning of the pulse is smaller in radial direction and has a slightly higher maximum in comparison to the temperature distribution T_{cs} of a conventional disc structure.

The thermal focusing and reflective layer T of this embodiment which is made from a NiPt alloy, has a certain reflectivity.

As an alternative when a higher reflectivity is necessary a further reflective layer can be added below the layer stack.

As an alternative, the recording layer is generated as a bi-layer. The bi-layer comprises e. g. copper Cu and silicon Si which are mixed or alloyed during the recording process.

As an alternative, a storage medium according to the invention is provided with a thermal focusing layer which is also generated as a thermally insulating layer and a reflective layer.

As an alternative, a storage medium according to the invention is provided with at least one separate thermal focusing layer T at opposite side to the light incident side of the active layer A, which is arranged between the active layer A and the thermally insulating layer I and/or between the thermally insulating layer I and a reflective layer.

As an alternative of the invention, a cover layer is provided instead of the substrate layer at the light incident side of the active layer and an outer bottom substrate layer is provided at the opposite side of the light incident side of the active layer.

A storage medium of another embodiment of the invention corresponds to that of the first embodiment in all features except of the following features:

The storage medium is provided with a thermally insulating layer and with a reflective layer R, at opposite side of the light incident side of the active layer A, wherein the thermal focusing layer T is also generated as that thermally insulating layer. A layer stack of the storage medium and a laser beam LB is shown in figure 5.

The thermal focusing and thermally insulating layer T is made from a dielectric material. This dielectric material has a thermal conductivity which decreases with increasing temperature. In this case the thermal focusing and thermally insulating layer T controls the heat transfer from the active layer A to the reflective layer R very efficiently. As a result, the high temperature area is also advantageously focused.

As an alternative, the material of the thermal focusing and thermally insulating layer T comprises a ceramic material with a thermal conductivity which decreases with increasing temperatures. Such ceramic materials are e. g. magnesium oxide MgO or aluminium oxide Al2O3.

A storage medium of a further embodiment of the invention corresponds to that of the first embodiment with all features except of the following features:

The storage medium is generated as an optical data disc with a high data density, wherein the active layer A is generated as a mask layer in order to enable read out of data below the optical diffraction limit. In particular, the storage medium is generated as a disc for Super-RENS and the mask layer comprises a phase changing material. A layer stack of the storage medium agrees in principal to that of the first embodiment and is shown in figure 4. The substrate layer S of this storage medium is provided with a pit structure.

The thermal focusing and reflective layer T is used for thermal balancing during read-out wherein typically the laser is used in continuous wave mode.

The data of the storage medium are read-out due to a pure change of optical properties of the active layer A generated as a mask layer. In particular, pits below the diffraction limit are read-out due to the change of these optical properties.

Super-RENS-discs with a conventional reflective layer need a higher laser power due to heat dissipation. A temperature of 150° Celsius is easily reached inside the layer stack of these discs during read-out.

The thermal focusing effect of the thermal focusing and reflective layer T avoid quick heat dissipation in the high temperature area. This allows reducing the maximum laser power. The thermal focusing also results in a smaller mask area due to this steeper temperature gradient in the front part of the temperature distribution. In addition, a shallower temperature distribution across the track can be achieved as indicated in figure 2. This reduces the cross-talk of the super-RENS signal from neighbouring tracks.

A storage medium of another embodiment of the invention corresponds to that of the first embodiment in all features except of the following features:

The storage medium is generated as a write-once disc, wherein a layer stack comprises the substrate layer S, the active layer A generated as a recording layer and the thermal focusing and reflective layer T. The recording layer comprises an organic material, such as an organic dye material.

## Claims

1. A storage medium for optical data comprising a substrate (S) and an active layer (A) and comprising, opposite to the light incident side of the active layer (A) a reflective layer (R), wherein at least one of the reflective layer and a separate layer is generated as a thermal focusing layer (T), which has a decreasing thermal conductivity with increasing temperature.

2. The storage medium according claim 1, wherein the thermal focusing layer (T) is also generated as a reflective layer.

3. The storage medium according to claim 2 wherein the material of the thermal focusing layer (T) comprises a nickel platinum NiPt alloy.

4. The storage medium according to one of the claims 1 to 3 further comprising a thermally insulating layer (I) opposite to the light incident side of the active layer (A), wherein at least one of the thermally insulating layer, the reflective layer and a separate layer is generated as the thermal focusing layer (T).

5. The storage medium according to claim 4 wherein the thermal focusing layer (T) is also generated as a thermally insulating layer.

6. The storage medium according to claim 5 wherein the material of the thermal focusing layer (T) comprises a dielectric material or a ceramic material.

7. The storage medium according to one of the claims 4 to 6, wherein the thermally insulating layer (I, T) is arranged between the active layer (A) and the reflective layer (R, T).

8. The storage medium according to one of the claims 1 to 7 comprising an additional thermally insulating layer (Ia) which is arranged between the substrate (S) and the active layer (A).

9. The storage medium according to one of the claims 1 to 8 wherein the active layer (A) is generated as a recording layer.

10. The storage medium according to one of the claims 1 to 8 wherein the active layer (A) is generated as a mask layer in order to enable read out of data below the optical diffraction limit.

11. An optical data disc generated as a storage medium with optical data according to one of the claims 1 to 10.
